# EUROPEAN PATENT SPECIFICATION

(11) **EP 2 170 032 B1**
(45) Date of publication and mention of the grant of the patent: **11.04.2012**
(21) Application number: 08715902.6
(22) Date of filing: 18.02.2008
(51) Int. Cl.: A01D 34/08, A01D 34/10, A01D 34/46, A01D 34/47, A01D 34/67, A01D 34/68, B60K 17/34

(54) **REAR WHEEL DRIVE LAWNMOWER PROVIDED WITH CLUTCH DEVICE FOR THE FOUR WHEEL DRIVE**
MIT EINER KUPPLUNGSVORRICHTUNG FÜR DEN VIERRADANTRIEB VERSEHENER RASENMÄHER MIT HINTERRADANTRIEB
TONDEUSE À TRACTION ARRIÈRE ÉQUIPÉE D'UN DISPOSITIF D'EMBRAYAGE POUR PASSAGE EN MODE QUATRE ROUES MOTRICES

(30) Priority: 28.06.2007 IT MI20071290
(43) Date of publication of application: 07.04.2010
(73) Proprietor: MA.RI.NA Systems S.r.l., 24034 Cisano Bergamasco (IT)
(72) Inventor: RIVOLTA, Pierluigi, I-23883 Brivio (LC) (IT)
(74) Representative: Riccardi, Sergio
(86) International application number: PCT/EP2008/001333
(87) International publication number: WO 2009/000344

(56) References cited:
- EP-A- 1 055 358
- GB-A- 566 715
- JP-A- 3 248 921
- JP-A- 2001 063 393
- JP-A- 2005 096 700
- US-A- 2 896 603
- US-A- 4 907 401

## Description

The present invention relates to a self propelled lawnmower for which it is possible to select two different traction modes.

Said lawnmower, indeed, beside the conventional traction system on the rear wheels, is able to transmit the movement even to the front wheels. Such possibility is provided to the operator through the drive of an clutch device suitable designed to allow ease and flexibility of the use.

The prior art lawnmowers have a single traction system also applied onto either the rear axle, such as it occurs in the most cases, or the front axle. These two known solutions are alternatively utilized for different uses: the rear wheel traction assures more maneuvering ease especially verifiable on complex paths and with high bend sections, whilst the front wheel drive facilitates the cutting operation in presence of medium and high slope lands, but having at the same time considerable steering difficulties.

Nevertheless both previously disclosed solutions badly suit cutting on sloping irregular and rough lands and/or characterized by not uniform and high lawn; for such lands the only possible solution is given by a four wheel drive transmission system.

Main object of the present invention is, therefore, to provide a self propelled lawnmower which allows for overcoming the abovementioned disadvantages by leaving to the operator the possibility to select either a rear wheel drive mode or a four wheel drive mode, depending on the type of land on which cutting has to be performed.

Another object of the present invention is to provide a self propelled lawnmower able to assures high level performances on every type of land and in absolute safety and comfort conditions. In presence of great differences in height, indeed, the conventional lawnmowers take the operator to difficult conditions mainly due to the need of physically pushing the lawnmower because, in case of rear wheel drive, the traction and therefore the self-propelling operation are no longer assured whilst, in case of front wheel drive traction, the maneuverability is compromised by forcing the operator to push the machine towards the desired direction. It is therefore clear how, in hard conditions in terms of slope or irregularity of the land, the practicability of the cutting operation is jeopardized and the operator safety as well.

Further object of the present invention is to provide a self propelled lawnmower able to make the shift tram a rear wheel drive system to a four drive system particularly easy to be engaged/disengaged, thus supporting even the reduction of consumption and wear connected to four wheel drive, by limiting the use of this traction system far the necessary cases. It is, indeed, expected that the four wheel drive mode can be activated even far few seconds, those necessary, for example, to overcome an obstacle, a subsidence, or to climb a slope in a smooth manner, returning then to the traditional traction, i.e. on the rear axle.

The possibility to obtain the abovementioned functions and the corresponding advantages is assured by the particular technical concept of the transmission members: two, different independent gear boxes are indeed provided onto both the rear and front axles. Such configuration has further advantages in terms of reliability: in case of gear box fault on the main rear axle the lawnmower can keep operating only with the front wheel traction engaged in order to complete the just started cutting operation and before proceeding with the repair of the fault member. The subject-matter of the preamble of the independent claim 1 is known from JP-A-2005 096700 and EP-A-1 055 358.

The essential features of the self propelled four wheel drive clutching lawnmower are indicated in claim 1, and its advantageous improvements are indicated in the dependant claims. Now a detailed disclosure of the invention follows, made with reference to a preferred embodiment, given by way of illustrative and not limiting example, and illustrated in the annexed drawings, in which:
fig. 1 is a perspective view of the self propelled lawnmower according to a preferred embodiment of the present invention; and
fig. 2 is a perspective view of the traction actuating levers according to a preferred embodiment of the present invention.

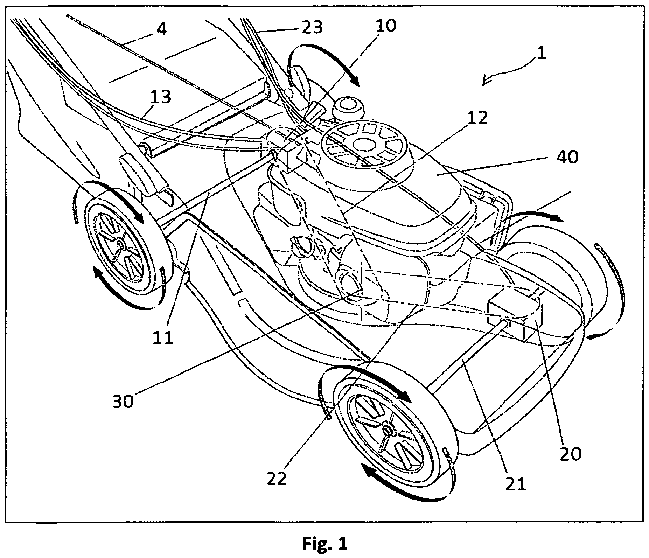

Referring now to fig. 1, there is shown the lawnmower 1 on which the engine unit 40 is installed operatively connected to the transmission system: such transmission system has a crankshaft 30, connected by suitable transmission belts 12 and 22 to the rear and front gearboxes 10 and 20, all of them shown as a scheme in fig. 1. Each gearbox 10 and 20 is interlocked for the movement transmission onto the corresponding rear and front axles 11 and 21. The command signal for actuating said gearboxes 10 and 20 is generated by the pull carried on two proper cables 13 and 23, associated with the gearboxes 10 and 20, respectively.

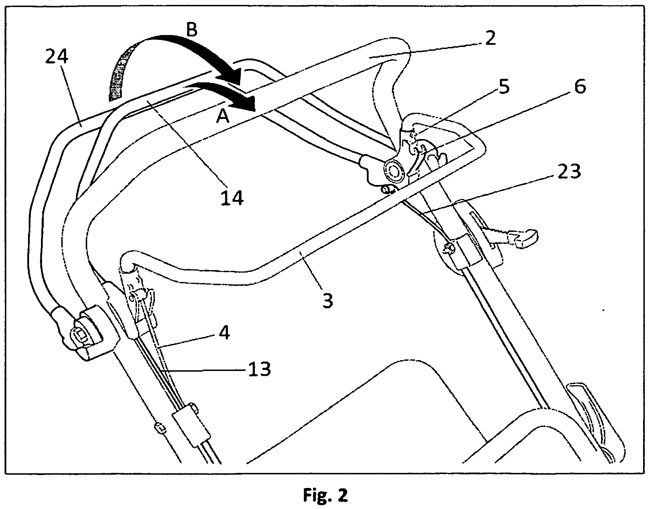

Referring now to fig. 2, there is shown the handlebar 2 on which the two command levers 14 and 24 are installed, operatively connected to the cables 13 and 23. On said handlebar 2 a third lever 3 is installed, operatively connected to a cable 4 (see also fig. 1) in turn connected, at its opposite end, to the engine unit 40. Even in fig. 1 the arrows A and B are shown pointing the direction to which the command levers 14 and 24, respectively, can be rotated in order to actuate the two different traction modes provided for the lawnmower 1 according to the preferred embodiment of the present invention.

The rear traction mode activation occurs, instead, by rotating the command lever 14 towards the direction indicated by the arrow A: thus the cable 13 acts on the clutch device within said gearbox 10 such that by the transmission belt 12 the movement is transmitted from the drive shaft 30 to the rear axle 11, with consequent use of the only rear traction. By acting, then, on the lever 24, i.e. by making it rotating towards the direction of the arrow B a pull is carried on the cable 23 which acts on the clutch device within said gearbox 20 such that by the transmission belt 22 the movement is transmitted from the drive shaft 30 to the front axle 21: the rotation of the lever 24 towards the direction of the arrow B occurs along a path which, from a given angular position, overlaps the path of the lever 14 and thus forcing the two levers 14 and 24 to rotate together. In such way it is possible to switch from the rear wheel to the four wheel drive traction.

It is clear to a person skilled in the art that several embodiments can result from the present disclosure which therefore is not to be considered restricted to the preferred embodiment just shown.

## Claims

1. A self propelled lawnmower (1) able to operate either in a rear wheel drive mode or in a four wheel drive mode, the rear (11) and front (21) axles being each provided with a gearbox (10, 20), respectively, independent from each other, each gearbox being operatively connected to the primary transmission (30) of the engine (40) of said lawnmower (1), **characterized by the fact that** said primary transmission (30) is engageable by levers (14, 24) being operatively connected by cables (13, 23) with said
gearboxes (10, 20), respectively, and hinged onto the handlebar (2) of said lawnmower (1).

2. The lawnmower (1) according to claim 1, **characterized by the fact that** the movement transmission system from said primary transmission (30) to each gearbox (10, 20) is obtained by a pair of transmission belts (12, 22), each interlocked to only one of said gearboxes (10, 20).

## Patentansprüche

1. Selbstfahrender Rasenmäher (1), die sowohl durch Hinterradantrieb als auch durch Vierradantrieb funktioniert, worin je die Hinterachse (11) und die Vorderachse (21) mit einem entsprechenden unabhängigen Getriebekasten (10, 20) versehen ist und jeder Getriebekasten mit der Hauptwelle (30) des Motors (40) des Rasenmähers (1) mitwirkt, **dadurch gekennzeichnet, dass** die Hauptwelle (30) durch Hebel (14, 24) einschaltbar ist und diese Hebel (14, 24) mit den Getriebekasten (10, 20) durch Kabel (13, 23) mitwirken und auf dem Lenker (2) des Rasenmähers (1)angelenkt werden.

2. Rasenmäher (1) nach Anspruch 1, **dadurch gekennzeichnet, dass** die Übertragung der Bewegung von der Hauptwelle (30) an den entsprechenden Getriebekasten (10, 20) durch ein Paar Treibriemen (12, 22) erzielt wird und jeder Treibriemen (12, 22) nur mit einem entsprechendem Getriebekasten (10, 20) verriegelt wird.

## Revendications

1. Tondeuse à gazon (1) automotrice apte à fonctionner soit en mode traction arrière soit en mode quatre roues motrices, dont les essieux arrière (11) et avant (21) son munis chacun d'une respective boîte de transmission (10, 20) indépendantes entre eux, chaque boîte de transmission étant opérationnellement jointe à la transmission principale (30) du moteur (40) de la tondeuse (1), **caractérisée en ce que** la dit transmission principale (30) est embrayable par des leviers (14, 24) qui sont opérationnellement joints respectivement par des câbles (13, 23) avec les dites boîtes de transmission (10,20) et articulés sur le guidon (2) de la tondeuse (1).

2. Tondeuse à gazon (1) selon la revendication 1, **caractérisé en ce que** le système de transmission du mouvement de la transmission principale (30) à chaque boîte de transmission (10, 20) est réalisé par une paire de courroies de transmission (12, 22) chacune étant asservie à une seule des dites boîtes de transmission (10, 20).
